(19) **Europäisches Patentamt / European Patent Office / Office européen des brevets**

(11) **EP 4 691 986 A1**

(12) **EUROPEAN PATENT APPLICATION**
published in accordance with Art. 153(4) EPC

(43) Date of publication:
**11.02.2026 Bulletin 2026/07**

(21) Application number: **24780791.0**

(22) Date of filing: **29.03.2024**

(51) International Patent Classification (IPC):
*C01B 39/46* (2006.01)

(52) Cooperative Patent Classification (CPC):
**C01B 39/46**

(86) International application number:
**PCT/JP2024/013015**

(87) International publication number:
**WO 2024/204696 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 JP 2023059077**

(71) Applicant: **Mitsui Kinzoku Company, Limited Tokyo (JP)**

(72) Inventors:
• **SHINDO, Shinji**
  **Ageo-shi, Saitama 362-0021 (JP)**
• **KOGAWA, Takahiro**
  **Ageo-shi, Saitama 362-0021 (JP)**
• **MATSUZAWA, Masato**
  **Ageo-shi, Saitama 362-0021 (JP)**
• **TOMITA, Junki**
  **Ageo-shi, Saitama 362-0025 (JP)**

(74) Representative: **Novagraaf Technologies**
**Bâtiment O2**
**2, rue Sarah Bernhardt**
**CS90017**
**92665 Asnières-sur-Seine Cedex (FR)**

(54) **BEA-TYPE ZEOLITE**

(57)      Provided is a BEA type zeolite having high acid strength and high crystallinity in a broad range of $SiO_2/Al_2O_3$ molar ratio. One of the present invention is a BEA type zeolite wherein the BEA type zeolite has a top of a peak caused by adsorption towards acid points of the BEA type zeolite in a range of 340°C or higher and 500°C or lower in an $NH_3$-TPD spectrum being raised at 10°C/min according to an ammonia-temperature programmed desorption method ($NH_3$-TPD method), and wherein in an X-ray diffraction spectrum measured by an X-ray diffraction method using a CuK$\alpha$ line, a ratio A/B of maximum diffraction intensity A of peaks of the BEA type zeolite to diffraction intensity B of a (111) plane of Si as a standard reference material 640c distributed by The National Institute of Standards and Technology is 25 or higher.

**EP 4 691 986 A1**

**Description**

**Technical Field**

The present invention relates to a BEA type zeolite.

**Background Art**

Zeolites are crystalline aluminosilicates, and have uniform pores attributable to their crystal structure. With making the most of this characteristic, the zeolites are industrially utilized as molecular sieve adsorbents which adsorb only molecules having a specific size, adsorption separating agents which adsorb molecules having strong affinity, and catalyst substrates. For example, BEA type zeolites are used as catalysts in petrochemical industries, and catalysts for purifying exhaust gas.

BEA type zeolites have been synthesized by using an organic structure directing agent (OSDA). BEA type zeolites synthesized without using an OSDA are also proposed. The BEA type zeolites synthesized without using an OSDA contain much of Al in their framework and the $SiO_2/Al_2O_3$ molar ratio is likely to be low. Zeolites having a low $SiO_2/Al_2O_3$ molar ratio have such a feature that the ion exchange capacity is high.

In order to utilize zeolites in broad applications, it is important to enable regulation of the $SiO_2/Al_2O_3$ molar ratio to a value suitable for use purpose in consideration of the affinity depending on differences in hydrophilicity, hydrophobicity, polarity or the like from those of reactants. That is, preparation of zeolites having a desired $SiO_2/Al_2O_3$ molar ratio is demanded. For example, in the case of making high the $SiO_2/Al_2O_3$ molar ratio of zeolites, it is demanded to provide zeolites which have been dealuminated and have a desired $SiO_2/Al_2O_3$ molar ratio.

Patent Literatures 1 and 2 disclose a dealumination process of a zeolite by an acid treatment and/or a steam treatment.

**Citation List**

Patent Literature

[0006]

　　　Patent Literature 1: Japanese Translation of PCT International Application Publication No. 2018-506500
　　　Patent Literature 2: Japanese Translation of PCT International Application Publication No. 2015-536291

**Summary of Invention**

Technical Problem

However, when the dealumination of a zeolite is carried out by an acid treatment and/or a steam treatment as described in Patent Literatures 1 and 2, since aluminum in the framework structure of the zeolite elutes, the acid strength of the zeolite lowers in some cases. Further, when aluminum in the framework structure of the zeolite is dealuminated, defects are generated in the crystal structure and the crystallinity decreases in some cases.

Then, the present invention has an object to provide a BEA type zeolite having high acid strength and high crystallinity in a $SiO_2/Al_2O_3$ molar ratio in a broad range.

Solution to Problem

The present invention proposes a BEA type zeolite, wherein the BEA type zeolite has a top of a peak caused by adsorption towards acid points of the BEA type zeolite in a range of 340°C or higher and 500°C or lower in an $NH_3$-TPD spectrum being raised at 10°C/min according to an ammonia-temperature programmed desorption method ($NH_3$-TPD method), and wherein in an X-ray diffraction spectrum measured by an X-ray diffraction method using a CuKα line, a ratio A/B of maximum diffraction intensity A of peaks of the BEA type zeolite to diffraction intensity B of a (111) plane of Si as a standard reference material 640c distributed by The National Institute of Standards and Technology is 25 or higher.

The present invention proposes a BEA type zeolite, wherein when the area of a peak whose peak top chemical shift value is positioned in the range of 55.5 ppm or higher and 60.0 ppm or lower is represented by peak 1 and a peak whose peak top chemical shift value is positioned in the range of 51.0 ppm or higher and lower than 55.5 ppm is represented by peak 2, the area ratio P1/(P1 + P2) of the area P1 of the peak 1 to the sum of the area P1 of the peak 1 and the area P2 of the peak 2 is in the range of 0.4 or higher and 1.0 or lower, and wherein in an X-ray diffraction spectrum measured by an X-ray diffraction method using a CuKα line, a ratio A/B of maximum diffraction intensity A of peaks of the BEA type zeolite to diffraction intensity B of a (111) plane of Si as a standard reference material 640c distributed by The National Institute of Standards and Technology is 25 or higher.

Advantageous Effects of Invention

The present invention can provide a BEA type zeolite having high acid strength and high crystallinity in a $SiO_2/Al_2O_3$ molar ratio in a broad range.

**Brief Description of Drawings**

[Figure 1] Figure 1 shows X-ray diffraction spectra of BEA type zeolites obtained in Example 3 and Comparative Example 2.
[Figure 2] Figure 2 shows relations between the acid strengths and the acid amounts per Al molar amount of BEA type zeolites obtained in Example 1 and Comparative Example 2.
[Figure 3] Figure 3 shows an NMR spectrum of the BEA type zeolite obtained in Example 3.
[Figure 4] Figure 4 shows the NMR spectrum (enlarged) of the BEA type zeolite obtained in Example 3.
[Figure 5] Figure 5 shows an NMR spectrum of a BEA type zeolite obtained in Comparative Example 4.
[Figure 6] Figure 6 shows the NMR spectrum (enlarged) of the BEA type zeolite obtained in Comparative Example 4.

**Description of Embodiments**

Embodiments of the present invention can include the following technical ideas.

[1] A BEA type zeolite, wherein the BEA type zeolite has a top of a peak caused by adsorption towards acid points of the BEA type zeolite in a range of 340°C or higher and 500°C or lower in an $NH_3$-TPD spectrum being raised at 10°C/min according to an ammonia-temperature programmed desorption method ($NH_3$-TPD method), and wherein in an X-ray diffraction spectrum measured by an X-ray diffraction method using a CuKα line, a ratio A/B of maximum diffraction intensity A of peaks of the BEA type zeolite to diffraction intensity B of a (111) plane of Si as a standard reference material 640c distributed by The National Institute of Standards and Technology is 25 or higher.
[2] A BEA type zeolite, wherein when the area of a peak whose peak top chemical shift value is positioned in the range of 55.5 ppm or higher and 60.0 ppm or lower is represented by peak 1 and a peak whose peak top chemical shift value is positioned in the range of 51.0 ppm or higher and lower than 55.5 ppm is represented by peak 2, the area ratio P1/(P1 + P2) of the area P1 of the peak 1 to the sum of the area P1 of the peak 1 and the area P2 of the peak 2 is in the range of 0.4 or higher and 1.0 or lower, and wherein in an X-ray diffraction spectrum measured by an X-ray diffraction method using a CuKα line, a ratio A/B of maximum diffraction intensity A of peaks of the BEA type zeolite to diffraction intensity B of a (111) plane of Si as a standard reference material 640c distributed by The National Institute of Standards and Technology is 25 or higher.
[3] The BEA type zeolite according to [1] or [2], wherein the BEA type zeolite has a $SiO_2/Al_2O_3$ molar ratio in the range of 13 or higher and 1,000 or lower.
[4] The BEA type zeolite according to any of [1] to [3], wherein the BEA type zeolite is a proton type BEA type zeolite ion-exchanged with hydrogen ions, a sodium type BEA type zeolite ion-exchanged with sodium ions, or an ammonium type BEA type zeolite ion-exchanged with ammonium ions.
[5] The BEA type zeolite according to any of [1] to [4], wherein the total ammonium molar amount adsorbed on acid points of the BEA type zeolite in which the temperature is raised at 10°C/min according to an ammonia-temperature programmed desorption method ($NH_3$-TPD method) with respect to an Al molar amount contained in the BEA type zeolite is 0.30 mmol/Al-mmol or higher.

Then, the present invention will be described based on the embodiments. The present invention, however, is not limited to the embodiments described hereinafter.
The BEA type zeolite has a top of a peak caused by adsorption towards acid points of the BEA type zeolite in the range of 340°C or higher and 500°C or lower in an $NH_3$-TPD spectrum of the BEA type zeolite being raised at 10°C/min according to an ammonia-temperature programmed desorption method ($NH_3$-TPD method); and in an X-ray diffraction spectrum measured by an X-ray diffraction method using a CuKα line, the ratio A/B of the maximum diffraction intensity A of peaks of the BEA type zeolite to the diffraction intensity B of the (111) plane of Si as a standard reference material 640c distributed by The National Institute of Standards and Technology is 25 or higher.

When the BEA type zeolite has a top of a peak caused by adsorption towards acid points of the BEA type zeolite in the range of 340°C or higher and 500°C or lower in an $NH_3$-TPD spectrum of the BEA type zeolite being raised at 10°C/min according to an ammonia-temperature programmed desorption method ($NH_3$-TPD method), it is indicated that $NH_3$ is adsorbed on acid points exhibiting high acid strength, and it is indicated that the BEA type zeolite has high acid strength. The top of the peak caused by adsorption towards acid points of the BEA type zeolite in the $NH_3$-TPD spectrum of the BEA type zeolite is preferably in the range of 350°C or higher and 500°C or lower and more preferably in the range of 350°C or higher and 450°C or lower.

In X-ray diffraction spectra measured by an X-ray diffraction method using a CuKα line, the ratio A/B of the maximum diffraction intensity A of peaks of the BEA type zeolite to the diffraction intensity B of the (111) plane of Si as a standard reference material 640c distributed by The National Institute of Standards and Technology is 25 or higher. The ratio A/B is an index of the crystallinity of the BEA type zeolite. When the ratio A/B is 25 or higher, high crystallinity is retained and the crystal structure is stable. The ratio A/B in the X-ray diffraction spectrum of the BEA type zeolite is more preferably 27 or higher, still more preferably 33 or higher, further still more preferably 35 or higher, and especially preferably 40 or higher, and may be 200 or lower, may be 150 or lower, may be 100 or lower, or may be 80 or lower. The X-ray diffraction spectrum of the BEA type zeolite can be measured by using an X-ray diffraction analyzer (for example, RINT-TTR III, manufactured by Rigaku Corp.) and using a CuKα line as an X-ray source (0.15406 nm, 50 kV, 300 mA).

In an $^{27}$Al MAS NMR spectrum of the BEA type zeolite, when a peak whose peak top chemical shift value is positioned in the range of 55.5 ppm or higher and 60.0 ppm or lower is represented by peak 1 and a peak whose peak top chemical shift value is positioned in the range of 51.0 ppm or higher and lower than 55.5 ppm is represented by peak 2, the area ratio P1/(P1 + P2) of the area of the peak 1 to the sum of the area of the peak 1 and the area of the peak 2 is in the range of 0.4 or higher and 1.0 or lower; and in X-ray diffraction spectra measured by an X-ray diffraction method using a CuKα line, the ratio A/B of the maximum diffraction intensity A of peaks of the BEA type zeolite to the diffraction intensity B of the (111) plane of Si as a standard reference material 640c distributed by The National Institute of Standards and Technology is 25 or higher.

The $^{27}$Al MAS NMR spectrum of the BEA type zeolite can be measured, for example, under the following condition.

Magnetic field: 14.1 T ($^1$H 600 MHz)
Spectrometer: AVANCE NEO600, manufactured by Bruker Corp.
Software for measurement and data processing: TopSpin, manufactured by Bruker Corp.
NMR probe: 3.2 mm MAS probe
Sample revolution frequency: 20 kHz
Reference sample for chemical shift value and radio wave intensity: potassium alum
Reference of chemical shift value: the center peak of potassium alum is taken to be -0.21 ppm
Spectrum center (O1 value-SR value (indicated with chemical shift)): 53.066 ppm
Radio wave pulse intensity: which is made to be a value at which the pulse width making the peak of potassium alum maximum when the spectrum center is 51.675 ppm becomes 4.5 μs
Radio wave pulse width: 2.5 μs
Measurement interval: 10.4 μs (5.2 μs in terms of numerical value indicated as symbol DW on the above software)
Number of measurement points: 961 points (1,922 in terms of numerical value indicated as symbol TD on the above software)
Number of spectrum points (symbol SI on the above software): 4.096 points
Number of integrations (symbol NS on the above software): 3,200

An $^{27}$Al MAS NMR spectrum is obtained by baseline correcting, on the calculation software, a spectrum obtained as described above. The baseline is fabricated by connecting a point Q1 determined by arithmetically averaging chemical shift values and signal intensities, respectively, of all points from a point nearest to 90 ppm to a point nearest to 100 ppm with a point Q2 determined by arithmetically averaging chemical shift values and signal intensities, respectively, of all points from a point nearest to -50 ppm to a point nearest to -40 ppm.

The spectrum obtained as described above is referred to as "Al actual spectrum". A peak 1 and a peak 2 are peaks separated from the Al actual spectrum. The peak separation is carried out by fitting a calculated spectrum fabricated by the sum of two pseudo-Voigt functions to the Al actual spectrum in the range of from a point nearest to -40 ppm of $^{27}$Al chemical shift value to a point nearest to 90 ppm thereof (hereinafter, for convenience, denoted as "in the range of -40 ppm or more and 90 ppm or less"). The pseudo-Voigt function is the sum of a Lorentz function and a Gauss function having the same full-width at half maximum. A pseudo-Voigt function f(x) used in the peak separation is shown as an expression (1) described later. The peak area of the each peak is determined by using the sum of signal intensities of the peak calculated by the pseudo-Voigt function at points in the range of -40 ppm or more and 90 ppm or less of the Al actual spectrum. Then, chemical shift values $x_0$ of peak tops obtained by the fitting by the pseudo-Voigt function are referred to as "chemical shift values of peak tops" of the peak 1 and the peak 2. The fitting is carried out until the D0/Y0, a ratio of a mean square error D0 between the actual spectrum and a spectrum (hereinafter, referred to as "calculated spectrum") being the sum of all peaks calculated to a maximum value Y0 in the range of -40 ppm or more and 90 ppm or less of the actual spectrum, becomes 0.01 or lower. In the case where the D0/Y0 does not fall to 0.01 or lower, there are added one or more peaks whose peak top chemical shifts are in the range of more than 59.0 ppm and 90 ppm or less, and one or more peaks whose peak top chemical shifts are in the range of -40 ppm or more and less than 45 ppm. When by this addition of peaks, the D0/Y0 falls to 0.01 or lower, no peaks are added; and in the case where the D0/Y0 is higher than 0.01, the above-mentioned operation is repeated.

Here, the "pseudo-Voigt function" is based on "6. Profile functions and Pattern decomposition methods" of Journal of the Crystallographic Society of Japan 34, 86(1992), "Special Edition, New Development of Powder Diffractometry".

The total (P1 + P2) of the peak area P1 and the peak area 2 of two peaks of the peak 1 and the peak 2 in the $^{27}$Al MAS NMR spectrum of the BEA type zeolite has a positive correlation with the amount of aluminum in the BEA type zeolite. In one unit cell of the crystal structure of the BEA type zeolite, there are silicon sites of T1 to T9, as described in a Non Patent Literature, Yoshihiro Kubota et. al., "Effective fabrication of catalysts from large-pore, multi-dimensional zeolites synthesized without using organic structure-directing agents", Chemistry of Materials, 2014, 26(2), 1250-1259 (hereinafter, referred to also as "Non Patent Literature Yoshihiro" in some cases).

In the $^{27}$Al MAS NMR spectrum of the BEA type zeolite, the peak 1 is positioned in the range of the chemical shift value of the peak top of 55.5 ppm or more and 60.0 ppm or less.

The area P1 of the peak 1 has a positive correlation with the amount of aluminum substituted on silicon sites of T3 to T9 out of the 9 silicon sites of T1 to T9 equivalently present in the crystal structure of the BEA type zeolite.

In the case where a plurality of peaks are observed in the range of 55.5 ppm or more and 60.0 ppm or less, the total value of areas of the plurality of peaks is regarded to be the area P1 of the peak 1. It is presumed that the reason why the plurality of peaks are observed is that aluminum in the process of release is detected.

Then, it is conceivable that when the area P1 of the peak 1 is large, since the amount of ammonia (NH$_3$) adsorbed according to the ammonia-temperature programmed desorption method (NH$_3$-TPD method) becomes large, in the crystal structure of the BEA type zeolite, oxygen (O) bound with aluminum substituted on silicon sites of T3 to T9 out of silicon sites of T1 to T9 easily becomes strong acid points.

The peak 1 indicates a peak originated from aluminum substituted on silicon sites of T3 to T9 out of 9 silicon sites of T1 to T9 equivalently present in the crystal structure of the BEA type zeolite.

In the crystal structure of the BEA type zeolite, with aluminum (Al) being substituted on silicon (Si) sites of T3 to T9, the amount of ammonia (NH$_3$) adsorbed becomes large, and when ammonia is desorbed by calcining after the ammonia is adsorbed on the zeolite, 4-coordinated aluminum forms acid points. The acid points fabricated by 4-coordinated aluminum in the BEA type zeolite are Bronsted acid points. The acid points of 4-coordinated aluminum in the BEA type zeolite become active points of the oxidation reaction in cleanup of adsorbed hydrocarbon (HC).

In the $^{27}$Al MAS NMR spectrum of the BEA type zeolite, the peak 2 is positioned in the range of the chemical shift value of the peak top of 51.0 ppm or more and less than 55.5 ppm.

The peak 2 indicates a peak originated from aluminum substituted on silicon sites T1 and/or T2 out of 9 silicon sites T1 to T9 equivalently present in the crystal structure of the BEA type zeolite. The aluminum substituted on silicon sites of T1 and/or T2 is 4-coordinated aluminum which relatively hardly function as acid points, and acid points adjacent to Al atoms fabricated by the 4-coordinated aluminum which relatively hardly function as acid points are a relatively weak acid and become low in acid strength.

In the case where a plurality of peaks are observed in the range of 51.0 ppm or more and less than 55.5 ppm, the total value of areas of the plurality of peaks is regarded to be the area P2 of the peak 2. It is presumed that the reason why the plurality of peaks are observed is that aluminum in the process of release is detected.

In the $^{27}$Al MAS NMR spectrum of the obtained BEA type zeolite, a peak in the range of the chemical shift value of the peak top of -10.0 ppm or more and 10.0 ppm or less is a peak originated from 6-coordinated aluminum present out of the framework structure of the zeolite.

In the $^{27}$Al MAS NMR spectrum of the obtained BEA type zeolite, the area ratio P1/(P1 + P2) becomes a value exhibiting a positive correlation with the presence ratio of aluminum substituted on silicon sites of T3 to T9 and easily becoming strong acid points exhibiting high acid strength to the total amount of aluminum substituted on 9 silicon sites of T1 to T9 in a sample of the BEA type zeolite. The number of sites of the silicon sites of T1 to T9 in one unit cell of the BEA type zeolite is, in T7 and T9 each, 4 sites, and in T1 to T6 and T8 each, 8 sites. In one unit cell of the BEA type zeolite, the total of T3 to T9 is 48 sites and the total of T1 and T2 is 16 sites. In the $^{27}$Al MAS NMR spectrum of the BEA type zeolite, when the area ratio P1/(P1 + P2) of the area P1 of the peak 1 to the sum of the area P1 of the peak 1 and the area P2 of the peak 2 is in the range of 0.4 or higher and 1.0 or lower, such a state is made that high acid strength is retained and Bronsted acid points abound.

Here, about the relation between the BEA type zeolite crystal structure and the $^{27}$Al MAS NMR spectrum, there is description in the above-mentioned Non Patent Literature Yoshihiro.

The fact that aluminum substituted on silicon sites of T1 to T9 in a sample of the BEA type zeolite is tetrahedrally coordinated aluminum and functions as acid points is described in a Non Patent Literature, J.A. van Bokhoven et. al., "Stepwise Dealumination of Zeolite Beta at Specific T-Sites Observed with 27Al MAS and 27Al MQ MAS NMR", J. Am. Chem. Soc., 2000, 122, 12842-12847. It is also described that aluminum substituted on silicon sites of T3 to T9 attracts $H_2O$ and forms octahedrally coordinated aluminum, and cations are non-localized. From this, the present inventors presume that aluminum substituted on silicon sites of T3 to T9, since making the imbalance of the charge larger than aluminum substituted on silicon sites of T1 and T2, functions as strong acid points. It is presumed that conversely, aluminum substituted on silicon sites of T1 and T2, since making the imbalance of the charge smaller than aluminum substituted on silicon sites of T3 to T9, relatively hardly functions as acid points.

From the viewpoint of obtaining the BEA type zeolite having high crystallinity and high acid strength in a $SiO_2/Al_2O_3$ molar ratio in a broad range, the area ratio P1/(P1 + P2) in the $^{27}$Al MAS NMR spectrum of the BEA type zeolite is in the range of 0.4 or higher and 1.0 or lower, and preferably in the range of 0.5 or higher and 0.95 or lower, and more preferably 0.6 or higher, and may be 0.90 or lower, or may be 0.85 or lower.

The pseudo-Voigt function f(x) used in the peak separation in the pseudo-Voigt spectrum can be derived by the following expression (1).

[Expression 1]

$$f(x) = S \cdot \left\{ \eta \cdot \frac{2}{H\pi} \cdot \frac{1}{1+4\left(\frac{x-x_0}{\Delta}\right)^2} + (1-\eta) \cdot \frac{2}{\Delta}\left(\frac{ln2}{\pi}\right)^{\frac{1}{2}} \cdot \exp\left[-4ln2\left(\frac{x-x_0}{\Delta}\right)^2\right] \right\} \quad (1)$$

In the expression (1), x denotes a value (chemical shift value) of the abscissa of the NMR spectrum; $x_0$ denotes a chemical shift value of a peak top; S denotes a scaling coefficient to match actual measurement; η denotes a peak area ratio of a Lorentz function (first term) in the range of from -∞ (minus infinity) to +∞ (plus infinity); H and Δ denote a full-width at half maximum of a peak; π is the circular constant; ln denotes a natural logarithmic function; and exp denotes a natural exponential function.

In the peak separation, fitting is carried out by using a solver function of the calculation software so that with $x_0$, Δ, η and S of two pseudo-Voigt functions each being variables, the mean square deviation between the actual spectrum and the calculated spectrum in the range of the chemical shift value of -40 ppm or more and 90 ppm or less becomes minimum. The scaling coefficient S is described as a numerical value so normalized that the sum of S of all peaks falls to 1.

The $SiO_2/Al_2O_3$ molar ratio of the BEA type zeolite of the present invention is preferably in the range of 13 or higher and 1,000 or lower. The BEA type zeolite has high acid strength and high crystallinity in a $SiO_2/Al_2O_3$ molar ratio in a broad range, and there can be provided a BEA type zeolite having a desired $SiO_2/Al_2O_3$ molar ratio according to applications. The $SiO_2/Al_2O_3$ molar ratio of the BEA type zeolite may be in the range of 14 or higher and 800 or lower, and may be 700 or lower, may be 600 or lower, may be 500 or lower, or may be 400 or lower. A zeolite having a high $SiO_2/Al_2O_3$ molar ratio becomes high in hydrothermal durability. The hydrothermal durability indicates difficulty in the crystal structure being damaged when the zeolite is exposed to a high temperature in the presence of steam. A zeolite having a low $SiO_2/Al_2O_3$ molar ratio has much Al in the zeolite framework. Hence, the charge of the framework of the zeolite becomes minus and it becomes easy for cations to be introduced from out of the framework and the ion-exchange capacity is enhanced. The $SiO_2/Al_2O_3$ molar ratio of the obtained zeolite can be evaluated, for example, by measuring the amount of Si and the amount of Al by element analysis using an X-ray fluorescence analyzer (for example, ZSX Primus II, manufactured by Rigaku Corp.), or ICP atomic emission spectrometry, and calculating from the obtained amounts of Si and Al.

The BEA type zeolite may be at least one zeolite selected from the group consisting of proton type BEA type zeolites ion-exchanged with hydrogen ions, sodium type BEA type zeolites ion-exchanged with sodium ions, and ammonium type BEA type zeolite ion-exchanged with ammonium ions. Each cation type BEA type zeolite may be obtained by bringing the obtained BEA type zeolite into contact with water or an aqueous solution containing sodium ions or ammonium ions, or a proton type BEA type zeolite may be obtained by heating an ammonium ion type BEA type zeolite.

The total ammonium molar amount adsorbed on acid points of the BEA type zeolite in which the temperature is raised at 10°C/min according to the ammonia-temperature programmed desorption method ($NH_3$-TPD method) with respect to the Al molar amount contained in the BEA type zeolite is preferably 0.30 mmol/Al-mmol or higher. When the total ammonium molar amount adsorbed on acid points with respect to the Al molar amount of the BEA type zeolite is 0.30 mmol/Al-mmol or higher, it is indicated that $NH_3$ is sufficiently adsorbed on acid points and acid points exhibiting high acid strength remain. The total ammonium molar amount adsorbed on acid points with respect to the Al molar amount of the BEA type zeolite is more preferably 0.35 mmol/Al-mmol or higher and still more preferably 0.38 mmol/Al-mmol or higher, and is 1.8 mmol/Al-mmol or lower, preferably 1.0 mmol/Al-mmol or lower, and more preferably 0.95 mmol/Al-mmol or lower, and may be 0.90 mmol/Al-mmol or lower, or may be 0.85 mmol/Al-mmol or lower.

The BEA type zeolite of the present invention can be produced by the following production method. It is preferable that the method for producing the BEA type zeolite comprises a step of preparing a zeolite, a step of mixing the zeolite with water to prepare a zeolite mixed liquid, and a step of continuously feeding a solution containing an inorganic acid to the zeolite mixed liquid.

In the method for producing a zeolite, by continuously feeding the solution containing an inorganic acid to the zeolite mixed liquid, the zeolite gently reacts with the inorganic acid. Thereby, Al not contained in the framework structure and 4-coordinated Al contained in the framework structure which relatively hardly function as acid points preferentially elute, and 4-coordinated Al which relatively likely to function as acid points easily remains in the framework structure. Acid points adjacent to Al atoms of 4-coordinated Al in the framework structure of the zeolite become Bronsted acid points. The acid points made by 4-coordinated Al in the zeolite are strong in acid strength and become active points of a reaction when adsorbed hydrocarbon is cleaned in the case where hydrocarbon is adsorbed, for example. 3-Coordinated Al becomes Lewis acid points, and is acid points other than acid points becoming the catalytic active centers. The 4-coordinated aluminum becoming Bronsted acid points strong in acid strength remains in the framework structure and becomes the catalytic active centers. The elution of 4-coordinated aluminum which relatively hardly function as acid points from the framework structure results in diminishing of Al with high acid strength being retained, and for example, a zeolite having a high $SiO_2/Al_2O_3$ molar ratio can be prepared from a zeolite having a low $SiO_2/Al_2O_3$ molar ratio. Since in the crystal structure of a zeolite constituted of a repeating unit of $SiO_4$ and $AlO_4$ tetrahedrons, even when Al which relatively hardly function as acid points elutes, Al relatively easily functioning as acid points remains, a zeolite regulated in the $SiO_2/Al_2O_3$ molar ratio with high crystallinity being retained can be obtained.

The solution containing an inorganic acid has preferably a pH of 5 or lower at normal temperature (for example, 25°C). By continuously feeding the solution containing an inorganic acid and having a pH of 5 or lower to the zeolite mixed liquid, the inorganic acid and the zeolite gently react, and Al not contained in the framework structure and Al which hardly function as acid points are caused to elute preferentially from the framework structure, whereby the $SiO_2/Al_2O_3$ molar ratio can be regulated with high acid strength being retained. The pH of the solution containing an inorganic acid to be continuously fed to the zeolite mixed liquid is, in order for the inorganic acid contained in the zeolite and the solution to gently react, preferably 5 or lower, and may be 3 or lower or may be 1 or lower, and may be -2 or higher or may be -1.5 or higher.

The rate of continuous feed of the solution containing an inorganic acid with respect to 1,000 g of the zeolite contained in the zeolite mixed liquid is preferably 3.0 mL/min or lower, more preferably 2.5 mL/min or lower, still more preferably 2.0 mL/min or lower and further still more preferably 1.8 mL/min or lower. The lower limit value is not limited, but may be, from the viewpoint of the production efficiency, for example, 0.05 mL/min or higher, may be 0.10 mL/min or higher, may be 0.12 mL/min or higher, may be 0.15 mL/min or higher, or may be 0.20 mL/min or higher. When the rate of continuous feed of the solution containing an inorganic acid with respect to 1,000 g of the zeolite contained in the zeolite mixed liquid is 3.0 mL/min or lower, the zeolite and the inorganic acid gently react, whereby the $SiO_2/Al_2O_3$ molar ratio can be regulated with high acid strength and high crystallinity thereof being retained.

The concentration of the inorganic acid in the solution containing an inorganic acid to be continuously fed to the zeolite mixed liquid suffices if being 50% by mass or higher, and may be 60% by mass or higher, may be 70% by mass or higher, may be 75% by mass or higher, or may be 100% by mass, and may be 98% by mass or lower.

The total mass of the inorganic acid to be added to 1,000 g of the zeolite is preferably in the range of 200 g or higher, more preferably in the range of 250 g or higher, still more preferably in the range of 300 g or higher, and further still more preferably in the range of 325 g or higher. Since the total mass of the inorganic acid can be regulated according to the $SiO_2/Al_2O_3$ molar ratio of a zeolite as a target and the feed rate, the upper limit value is not limited, but may be, for example, 1,500 g or lower, may be 1,250 g or lower, or may be 1,150 g or lower. When the total mass of the inorganic acid with respect to 1,000 g of the zeolite is in the range of 200 g or higher, by continuously feeding the solution containing an inorganic acid to the zeolite mixed liquid, the inorganic acid and the zeolite gently react, and a zeolite regulated in the $SiO_2/Al_2O_3$ molar ratio with high acid strength and high crystallinity thereof being retained can be obtained.

The temperature of the zeolite mixed liquid when feeding the solution containing an inorganic acid continuously is preferably 80°C or higher, and may be 90°C or higher, or may be 100°C. When the temperature of the zeolite mixed liquid when feeding the solution containing an inorganic acid continuously is 80°C or higher, it becomes easy for the zeolite and the inorganic acid to gently react.

It is preferable to continuously feed the solution containing an inorganic acid under stirring of the zeolite mixed liquid. By continuously feeding the solution containing an inorganic acid under stirring of the zeolite mixed liquid, it becomes easy for the zeolite and the inorganic acid to react. A method of continuously feeding the solution containing an inorganic acid is not especially limited, and includes, for example, methods such as constant rate liquid feeding and dripping. The stirring rate of the zeolite mixed liquid is preferably varied according to the volume of the zeolite mixed liquid and the amount of the zeolite in the zeolite mixed liquid, and can be made to be, for example, 5 rpm or higher and 300 rpm or lower.

The time to continuously feed the solution containing an inorganic acid, though depending on the feed rate, may be 1 hour or longer, may be 2 hours or longer, may be 3 hours or longer, or may be 3.5 hours or longer, and may be 40 hours or shorter, or may be 38 hours or shorter. When a period of time to continuously feed the solution containing an inorganic acid is 1 hour or longer and 40 hours or shorter, the inorganic acid and the zeolite gently react, and Al which relatively hardly function as acid points is caused to elute preferentially from the framework structure, whereby a zeolite regulated in the $SiO_2/Al_2O_3$ molar ratio with high acid strength and high crystallinity thereof being retained can be obtained.

The inorganic acid is not especially limited as long as being a well-known acid used for dealumination of the zeolite. For example, there can be used at least one selected from the group consisting of phosphoric acid, sulfuric acid, hydrochloric acid, nitric acid and mixtures of two or more of these.

After feeding the solution containing an inorganic acid continuously to the zeolite mixed liquid, it is preferable to retain the zeolite and the inorganic acid without separation of the solution containing an inorganic acid and the zeolite. After feeding the solution containing an inorganic acid continuously, by bringing the zeolite and the inorganic acid to continuously contact with each other without separation of the zeolite and the inorganic acid, the reaction of the inorganic acid and the zeolite progresses more and Al which relatively hardly function as acid points can be eluted preferentially from the framework structure. Resultantly, a zeolite regulated in the $SiO_2/Al_2O_3$ molar ratio with high acid strength and high crystallinity thereof being retained can be obtained. Retaining the zeolite and the inorganic acid without separation of the solution containing an inorganic acid and the zeolite after feeding the solution containing an inorganic acid continuously to the zeolite mixed liquid is referred to also as "maturation".

The time to retain the zeolite and the inorganic acid without separation of the solution containing an inorganic acid and the zeolite after feeding the solution containing an inorganic acid continuously to the zeolite mixed liquid can be regulated according to the $SiO_2/Al_2O_3$ molar ratio of a zeolite as a target. The period of time to retain the zeolite and the inorganic acid, for example, may be 1 hour or longer, may be 2 hours or longer, or may be 3 hours or longer, and may be 15 hours or shorter, or may be 12 hours or shorter. The period of time to retain the zeolite and the inorganic acid without separation of the solution containing an inorganic acid and the zeolite after feeding the solution containing an inorganic acid continuously to the zeolite mixed liquid is referred to also as "maturation time".

In the maturation step, stirring may be carried out, or no stirring may be carried out. In the case of carrying out stirring, the stirring speed can be made to be, for example, 5 rpm or higher and 300 rpm or lower.

After feeding the solution containing an inorganic acid continuously to the zeolite mixed liquid and matured, there may be carried out a step of continuously feeding a solution containing an inorganic acid for the second time. The step of continuously feeding a solution containing an inorganic acid for the second time may be carried out under the same condition as in the continuous feeding for the first time (concentration, amount, speed, time), or may not be under the same condition. After the step of continuously feeding a solution containing an inorganic acid for the second time, a maturation step may further be carried out.

It is preferable that the zeolite to be prepared has a $SiO_2/Al_2O_3$ molar ratio of 3 or higher. When the $SiO_2/Al_2O_3$ molar ratio of the zeolite to be prepared is 3 or higher, by continuously feeding the solution containing an inorganic acid to the zeolite mixed liquid and allowing the zeolite and the inorganic acid to react, the $SiO_2/Al_2O_3$ molar ratio can be regulated so that the $SiO_2/Al_2O_3$ molar ratio becomes a higher value. The $SiO_2/Al_2O_3$ molar ratio of the zeolite to be prepared may be 5 or higher, may be 8 or higher, or may be 9 or higher. The upper limit value of the $SiO_2/Al_2O_3$ molar ratio of the zeolite to be prepared is not especially limited, but from the viewpoint of preparing zeolites having $SiO_2/Al_2O_3$ molar ratios in a broad range by removing aluminum contained in the zeolite, it is preferable that much of aluminum is contained. The $SiO_2/Al_2O_3$ molar ratio, for example, may be 500 or lower, may be 400 or lower, or may be 350 or lower.

The zeolite to be prepared is preferably one synthesized without using an organic structure directing agent (OSDA). The zeolite synthesized without using an OSDA has no need for removing the OSDA, and the energy and cost necessary for removing the OSDA can be eliminated. The zeolite synthesized without using an OSDA has few defects and contains much of aluminum corresponding to the $SiO_2/Al_2O_3$ molar ratio of 3 or higher. Hence, by continuously feeding the solution containing an inorganic acid to the zeolite mixed liquid, the inorganic acid and the zeolite gently react, and Al which relatively hardly function as acid points can be caused to elute preferentially from the framework structure and Al relatively easily functioning as acid points contributing to formation of acid points in the framework structure can be caused to remain. Thereby, the $SiO_2/Al_2O_3$ molar ratio can be regulated higher with high acid strength and high crystallinity thereof being retained. A zeolite synthesized without using an OSDA is referred to also as OSDA-free zeolite. A BEA type zeolite synthesized without using an OSDA is referred to also as OSDA-free BEA type zeolite. The OSDA-free BEA type zeolite can be produced, for example, with reference to a description in International Publication No. WO2021/002322.

The BEA type zeolite to be prepared may be at least one zeolite selected from the group consisting of proton type BEA type zeolites ion-exchanged with hydrogen ions, sodium type BEA type zeolites ion-exchanged with sodium ions, and ammonium type BEA type zeolites ion-exchanged with ammonium ions. Each cation type BEA type zeolite to be prepared may be obtained by bringing a BEA type zeolite into contact with water or an aqueous solution containing sodium ions or ammonium ions, or a proton type BEA type zeolite may be obtained by heating an ammonium ion type BEA type zeolite.

The water to be mixed with the zeolite is preferably deionized water or pure water. The concentration of the zeolite mixed liquid is not especially limited, and can suitably be regulated according to the amount of the zeolite to be prepared, the facility scale for the production, and the like.

A zeolite is separated from a processed mixed liquid obtained after feeding the solution containing an inorganic acid continuously to the zeolite mixed liquid. The zeolite separated from the mixed liquid may be cleaned, may be dried, or may be calcined. The separation of the zeolite is carried out by using a method of filtration, ultrafiltration, diafiltration, centrifugation, or the like. The separated zeolite may be cleaned with water, an alcohol such as methanol, ethanol, or propanol, or a mixture thereof. The cleaned zeolite may be dried and the drying suffices if the drying can remove moisture. The drying may be carried out, for example, in the air atmosphere, at a temperature of 50°C or higher and 120°C or lower for 3 hours or longer and 25 hours or shorter. The drying may use a dryer such as a fluidized dryer or a spray dryer.

The zeolite having high acid strength and high crystallinity in a desired $SiO_2/Al_2O_3$ molar ratio can be used, for example, for catalysts in petrochemical industries, hydrocarbon adsorbing materials, and exhaust gas purifying catalyst compositions containing the hydrocarbon adsorbing materials. The exhaust gas purifying catalysts formed by using exhaust gas purifying compositions can be used as exhaust gas purifying catalysts of internal combustion engines such as gasoline engines and diesel engines.

The catalysts in petrochemical industries, hydrocarbon adsorbing materials and exhaust gas purifying compositions containing the BEA type zeolite can be used by being formed into any shape of powdery shape, paste shape, granular shape, and the like. For example, the exhaust gas purifying composition can be used as a catalyst layer formed on a catalyst support. As the catalyst support, for example, a support composed of a ceramic or a metallic material can be used. The ceramic to be used as the catalyst support includes alumina ($Al_2O_3$), mullite ($3Al_2O_3\text{-}2SiO_2$), cordierite ($2MgO\text{-}2Al_2O_3\text{-}5SiO_2$), aluminum titanate ($Al_2TiO_5$), and silicon carbide (SiC). Examples of the metallic material to be used as the catalyst support include stainless steel. The shape of the catalyst support is not especially limited, but examples thereof include honeycomb shapes, plate shapes, and pellet shapes.

A catalyst structure containing an exhaust gas purifying catalyst using the exhaust gas purifying composition as a catalyst layer may contain a catalyst layer composed of a conventionally known catalyst material other than the exhaust gas purifying composition. The catalyst structure using the exhaust gas purifying composition as a catalyst layer can also be used as DPF (Diesel Particulate Filter) and GPF (Gasoline Particulate Filter).

**Examples**

Hereinafter, the present invention will be described in more detail by way of Examples and Comparative Examples. The present invention is not limited to these Examples.

Preparation of zeolites to be used in Examples 1 to 5

OSDA-free BEA type zeolites were prepared specifically as follows according to methods described in Examples of International Publication No. WO2021/002322.

(1) Fabrication of a seed crystal

Tetraethylammonium hydroxide was used as an OSDA; sodium aluminate was used as an alumina source and a micropowdery silica (P707, manufactured by Mizusawa Industrial Chemicals, Ltd.) was used as a silica source; and they were stirred and heated at 165°C for 96 hours to synthesize a BEA type zeolite having a Si/Al molar ratio of 12. The obtained BEA type zeolite was calcining at 550°C for 10 hours under circulation of air in an electric furnace to produce a seed crystal containing no organic substance. The seed crystal contained no OSDA.

(2) Fabrication of an OSDA-free sodium type BEA type zeolite (Na-BEA)

An OSDA-free BEA type zeolite was fabricated specifically as follows according to a method described in Examples of Japanese Patent No. 4904417.

2.35 g of sodium aluminate and 18.28 g of a 36-mass% sodium hydroxide were dissolved in 139 g of deionized water to obtain an aqueous solution. A mixture of 20.24 g of micropowdery silica (M-5, manufactured by Cabot Corp.) and 2.02 g of the seed crystal was added little by little to the aqueous solution, and stirred and mixed to obtain a reaction mixture having a composition in which a value of the $SiO_2/Al_2O_3$ molar ratio is as indicated in Table 1. This reaction mixture was put in a 60-mL stainless steel-made hermetically sealed vessel, and without being matured and stirred, statically heated at 140°C for 46 hours under autogenous pressure. After the hermetically sealed vessel was cooled, a resultant product was filtered and cleaned with warm water to obtain a white powder. An X-ray diffractometry described later confirmed that the white powder being the obtained product was an OSDA-free sodium type BEA type zeolite (Na-BEA) containing no impurities. The $SiO_2/Al_2O_3$ molar ratio of the obtained OSDA-free BEA type zeolite was measured by using a scanning X-ray fluorescence analyzer described later. The result is shown in Table 1. In Table 1, Table 2, and Table 3, "-" indicates that no processing of a pertinent item was carried out, or no pertinent numerical value was present.

(3) Fabrication of an OSDA-free ammonium type BEA type zeolite (NH$_3$-SEA)

10 g of the obtained OSDA-free sodium type BEA type zeolite was dispersed in 300 mL of a 2-mol/L ammonium nitrate aqueous solution. The dispersion was held at 80°C for 24 hours. Thereafter, the dispersion was filtered and then cleaned with distilled water in a sufficient amount, and dried at 100°C overnight. An OSDA-free ammonium type BEA type zeolite (NH$_3$-BEA) was thus obtained.

(4) Fabrication of an OSDA-free proton type BEA type zeolite (H-BEA)

The obtained OSDA-free ammonium type BEA type zeolite was calcined in an ammonia atmosphere at 600°C for 2 hours to obtain an OSDA-free proton type BEA type zeolite (H-BEA).

Preparation of a zeolite to be used in Reference Example 1

The same zeolite as the OSDA-free proton type BEA type zeolite (H-BEA) to be used in Examples 1 and 2 was used.

Preparation of a zeolite to be used in Comparative Example 1

A zeolite to be used in Comparative Example 1 was obtained by carrying out the same procedure as in the seed crystal used in Examples.

Preparation of a zeolite to be used in Comparative Examples 2 to 4

The same zeolite as the OSDA-free proton type BEA type zeolite (H-BEA) to be used in Examples 1 and 2 was used.

Examples 1 to 5

In each Example, a corresponding prepared BEA type zeolite and pure water were mixed to obtain a zeolite mixed liquid having a concentration indicated in Table 1. The weight of each BEA type zeolite indicated in Table 1 was a weight in a dry state. Here, the dry state refers to a state that the change (variation width) in the moisture percentage as measured by a moisture meter (MX-50, manufactured by A&D Co. Ltd.) is 0.01% or smaller.
Sulfuric acid or nitric acid was used as the inorganic acid, and a sulfuric acid aqueous solution or a nitric acid aqueous solution each having a concentration and a pH indicated in Table 2 was prepared.
The zeolite mixed liquid was set at each temperature indicated in Table 2, and put in a flask; and the sulfuric acid aqueous solution or the nitric acid aqueous solution was continuously fed (dropwise) to the zeolite mixed liquid under stirring, in an addition amount, at an addition rate and during a period of time taken for addition indicated in Table 2.
After the sulfuric acid aqueous solution or the nitric acid aqueous solution was continuously fed to the zeolite mixed liquid, without the sulfuric acid aqueous solution or the nitric acid aqueous solution and the zeolite being separated, the zeolite was continuously brought into contact with sulfuric acid or nitric acid during a period of time indicated in Table 2 to be matured. Then, the total time of a time for the sulfuric acid aqueous solution or the nitric acid aqueous solution to be continuously fed and the maturation time is indicated in Table 2.

Reference Example 1 and Comparative Example 1

The prepared zeolite to be used in Reference Example 1 and the prepared zeolite to be used in Comparative Example 1 were evaluated as described later. Then, Reference Example 1 and Comparative Example 1 carried out no processing using the inorganic acid.

Comparative Examples 2 and 3

In each Comparative Example, the prepared zeolite and pure water were mixed to obtain a zeolite mixed liquid having a concentration indicated in Table 1.
Sulfuric acid was used as the inorganic acid, and a sulfuric acid aqueous solution having a concentration and a pH each indicated in Table 2 was prepared.

The zeolite mixed liquid was set at a temperature each indicated in Table 2, and put in a flask; and the sulfuric acid aqueous solution in an addition amount indicated in Table 2 was fed at once to the zeolite mixed liquid under stirring.

After the total amount of the sulfuric acid aqueous solution was fed at once to the zeolite mixed liquid, without the sulfuric acid aqueous solution and the zeolite being separated, the zeolite was continuously brought in contact with sulfuric acid, and matured during a period of time indicated in Table 2. Since the total amount of the sulfuric acid aqueous solution was at once fed to the zeolite mixed liquid, the period of time for feeding the sulfuric acid aqueous solution continuously was 0 hour, and the total time of the period of time for feeding the sulfuric acid aqueous solution continuously and the maturation time was the same time as the maturation time.

Comparative Example 4

The prepared zeolite was calcined at 800°C and thereafter subjected to the same operation as in Comparative Example 2.

On each zeolite obtained by the production methods according to Examples 1 to 5 and each zeolite of Reference Examples and Comparative Examples, the following evaluations were carried out. The results are shown in Table 1 or Table 3.

Framework structure of a zeolite

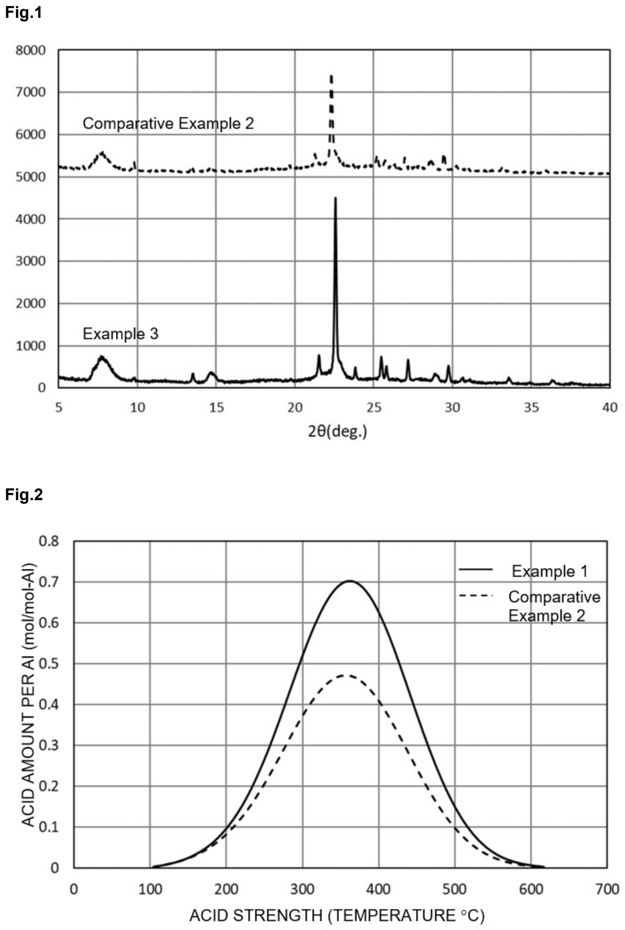

The fact that the prepared zeolites, and the zeolites relevant to Examples, Reference Examples, and Comparative Examples were BEA type zeolites was confirmed by measuring X-ray diffraction spectra of the obtained zeolites using a powder X-ray diffraction analyzer. In an X-ray diffraction spectrum using a powder X-ray diffraction analyzer and using a CuK$\alpha$ line, if there are diffraction peaks at positions of diffraction angles 2$\theta$ of $8 \pm 1.5°$ and $22.8 \pm 1°$, the zeolite can be confirmed to be a BEA type zeolite. The positions of diffraction angles 2$\theta$(°) of diffraction peaks in the X-ray diffraction spectrum were the same as the positions of diffraction angles 2$\theta$(°) of diffraction peaks of an X-ray diffraction spectrum disclosed in The International Zeolite Association. Figure 1 shows X-ray diffraction spectra of Example 3 and Comparative Example 2.

$SiO_2/Al_2O_3$ molar ratio of a zeolite

The Si amount and the Al amount in a measurement sample of each zeolite were measured by element analysis using a scanning X-ray fluorescence analyzer (ZSX PrimusII, manufactured by Rigaku Corp.), and the $SiO_2/Al_2O_3$ molar ratio was calculated from the measured Si amount and Al amount. For both of a prepared zeolite and a zeolite obtained after the solution containing an inorganic acid was continuously fed, the $SiO_2/Al_2O_3$ molar ratio was calculated from the Si amount and the Al amount in a measurement sample of each zeolite.

Ammonia-temperature programmed desorption method (NH$_3$-TPD method)

For each zeolite, measurement was carried out according to the ammonia-temperature programmed desorption method (NH$_3$-TPD method) to obtain an NH$_3$-TPD spectrum. The measurement was carried out according to the following procedure.

As a pre-treatment for a zeolite as an object, about 0.05 g of the zeolite was heated in He gas up to 500°C, held at 500°C for 10 min, and thereafter cooled to 100°C and held for 10 min. Then, with a sample temperature of 100°C, an ammonia gas diluted with He gas (the concentration of ammonia in He was 5% by volume, hereinafter, referred to also as "5% NH$_3$-He") was made to flow at a flow rate of 50 sccm for 30 min to cause ammonia to be adsorbed on the zeolite. Thereafter, ammonia was purged in He gas for 30 min in order to remove physically adsorbed ammonia. Thereafter, the zeolite was heated under a temperature increasing rate of 10°C/min from 100°C to 610°C, and the amount of ammonia desorbed was measured. As measuring apparatuses, a catalyst analyzer BELCAT-II (manufactured by MicrotracBell Corp.) and an online gas analyzer BELMass (manufactured by MicrotracBell Corp.) were used. Then, areas in TCD signal obtained by the measurement were calculated by using waveform separation software ChemMaster (manufactured by MicrotracBell Corp.). By using a calibration curve utilizing the relation between the flow rate when 5% NH$_3$-He gas was made to flow at a predetermined flow rate and the area, the area value of the TCD signal was converted to the amount of ammonia desorbed. Further, peak separation was carried out on the obtained TCD signal by using the above-mentioned software. The peak separation was carried out by using a waveform decomposing function of the software. In some cases, the TCD signal have 2 or 3 peaks. The present inventors presumed that each peak meant, from the low temperature side, physical adsorption, adsorption on acid points, and release of structural water. There were some cases where no peak meaning release of structural water appeared.

Acid amount (mmol)

By analyzing the TCD signal obtained by the above-mentioned measurement by the NH₃-TPD method, the peak area corresponding to adsorption on acid points (corresponding to the total ammonium molar amount adsorbed on acid points of the BEA type zeolite) was calculated and taken as an acid amount.

Acid amount per Al molar amount (mmol/Al-mmol)

The acid amount per Al molar amount was calculated by dividing the above-mentioned value of the acid amount by the Al molar amount contained in the zeolite. The Al molar amount was calculated by using the measurement result of the SiO$_2$/Al$_2$O$_3$ molar ratio of the zeolite.

Acid strength (°C)

By analyzing the above-mentioned TCD signal obtained by the measurement by the NH₃-TPD method, the peak top temperature of the peak caused by adsorption on acid points of the BEA type zeolite was taken as an acid strength. Figure 2 shows relations between the acid strength and the acid amount per Al molar amount in Example 1 and Comparative Example 2.

Ratio A/B (crystallinity)

An X-ray diffraction spectrum was measured by XRD by using an X-ray diffraction analyzer (RINT-TTR III, manufactured by Rigaku Corp.) and using a CuKα line (0.15406 nm, 50 kV, 300 mA) as an X-ray source. The measurement was carried out in the measurement range of diffraction angle of from 2θ = 5° to 80° under the condition of a scanning speed of 20°/min and a scanning step width of 0.02°. For analysis of the diffraction intensity, software "PDXL2" was used. After subtraction of the background, fitting of a split pseudo-Voigt function with the Kα1 position as the peak position was carried out to obtain an intensity of the diffraction peak. The peak intensity B of the (111) plane was determined from an X-ray diffraction spectrum measured on Si as a standard reference material 640c distributed by The National Institute of Standards and Technology, and there was determined the maximum diffraction intensity A of peaks in the X-ray diffraction spectrum of each zeolite of Examples, Reference Examples, and Comparative Examples were determined. Then, the ratio A/B of the maximum diffraction intensity A of peaks to the peak intensity B was determined.

$^{27}$Al MAS NMR spectrum

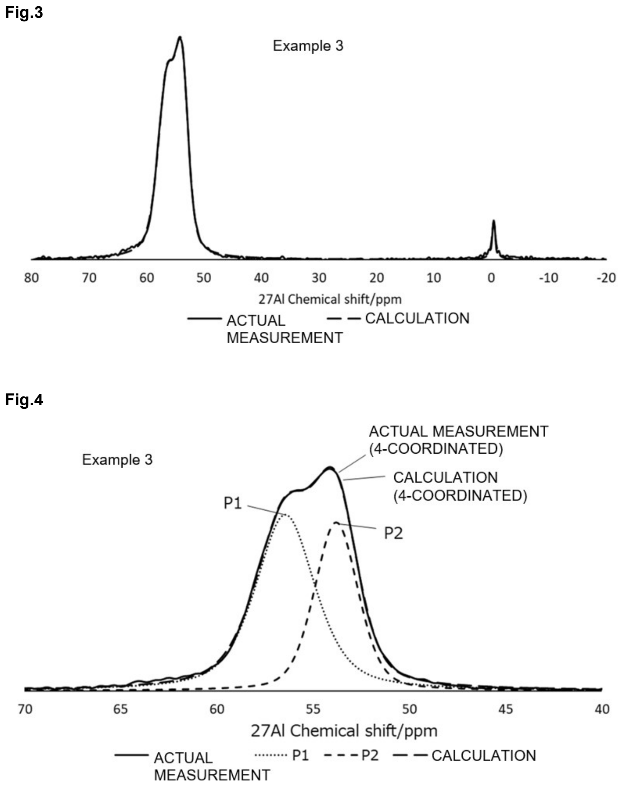

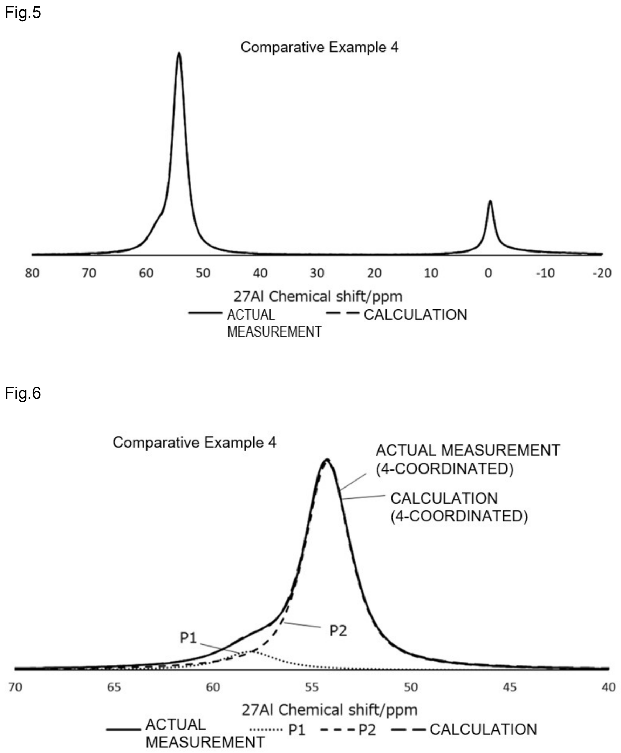

An $^{27}$Al MAS NMR spectrum of each zeolite was measured; and in the $^{27}$Al MAS NMR spectrum of each zeolite, peak 1 in which a chemical shift value of the peak top was positioned in the range of 55.5 ppm or more and 60.0 ppm or less, peak 2 in which a chemical shift value of the peak top was positioned in the range of 51.0 ppm or more and less than 55.5 ppm, the area P1 of the peak 1, the area P2 of the peak 2, the sum (P1 + P2) of the area P1 and the area P2, and the area ratio P1/(P1 + P2) of the area P1 with respect to the sum of the area P1 and the area P2 were calculated, and are described in Table 3. Further, in the $^{27}$Al MAS NMR spectrum of each zeolite, the area of a peak in which the chemical shift value of the peak top was in the range of - 10.0 ppm or more and 10.0 ppm or less was calculated. In the $^{27}$Al MAS NMR spectrum of each zeolite, the peak in which the chemical shift value of the peak top was in the range of -10.0 ppm or more and 10.0 ppm or less was a peak originated from 6-coordinated aluminum present out of the framework structure of the zeolite. In Table 3, the peak originated from 6-coordinated aluminum present out of the framework structure of a zeolite is described as "6-coordinated". In Figure 3 and Figure 4, there are shown an NMR spectrum of the BEA type zeolite obtained in Example 3, and an enlarged view of the peak originated from 4-coordinated, respectively. In Figure 5 and Figure 6, an NMR spectrum of the BEA type zeolite obtained in Comparative Example 4, and an enlarged view of the peak originated from 4-coordinated, respectively, are shown.

[Table 1]

| | Zeolite to be prepared | | | |
|---|---|---|---|---|
| | Kind | Weight [g] | Mixed liquid concentration [g/L] | SiO$_2$/Al$_2$O$_3$ ratio [-] |
| Example 1 | H-BEA | 1000 | 0.50 | 10.0 |
| Example 2 | H-BEA | 1000 | 0.50 | 10.0 |
| Example 3 | Na-BEA | 225 | 0.43 | 10.0 |

(continued)

|  | Zeolite to be prepared | | | |
|  | Kind | Weight [g] | Mixed liquid concentration [g/L] | SiO$_2$/Al$_2$O$_3$ ratio [-] |
| --- | --- | --- | --- | --- |
| Example 4 | Na-BEA | 750 | 0.54 | 10.0 |
| Example 5 | NH$_4$-BEA | 750 | 0.50 | 10.0 |
| Reference Example 1 | H-BEA | - | - | 10.0 |
| Comparative Example 1 | H-BEA | - | - | 21.7 |
| Comparative Example 2 | H-BEA | 10 | 0.50 | 10.0 |
| Comparative Example 3 | H-BEA | 10 | 0.50 | 10.0 |
| Comparative Example 4 | H-BEA | 10 | 0.50 | 10.0 |

[Table 2]

|  | Processing condition of zeolite | | | | | | | | | | | |
|---|---|---|---|---|---|---|---|---|---|---|---|---|
|  | Calcining temperature [°C] | Inorganic acid | Mixed liquid temperature [°C] | Inorganic acid pH | Inorganic acid concentration [wt%] | Inorganic acid addition amount [g] | Inorganic acid addition amount per 1,000 g of zeolite [g/g] | Inorganic acid addition rate [mL/min] | Inorganic acid addition rate per 1,000 g of zeolite [mL/min/g] | Inorganic acid addition time [h] | Maturation time [h] | Total time [h] |
| Example 1 | - | sulfuric acid | 100 | -1.41 | 75 | 325.3 | 325.3 | 0.78 | 0.78 | 4.1 | 10.9 | 15 |
| Example 2 | - | sulfuric acid | 100 | -1.41 | 75 | 488.2 | 488.2 | 0.78 | 0.78 | 6.2 | 8.8 | 15 |
| Example 3 | - | nitric acid | 100 | -1.11 | 60 | 841.8 | 3741.3 | 0.50 | 2.22 | 20.3 | 4 | 24.3 |
| Example 4 | - | sulfuric acid | 90 | -1.41 | 75 | 585.5 | 780.7 | 0.16 | 0.21 | 37.2 | 10.8 | 48 |
| Example 5 | - | sulfuric acid | 100 | -1.41 | 75 | 784.0 | 1045.3 | 0.78 | 1.04 | 10 | 0 | 10 |
| Reference Example 1 | - | - | - | - | - | - | - | - | - | - | - | - |
| Comparative Example 1 | - | - | - | - | - | - | - | - | - | - | - | - |
| Comparative Example 2 | - | sulfuric acid | 100 | -1.41 | 75 | 4.9 | 490.0 | - | - | 0 | 20 | 20 |
| Comparative Example 3 | - | sulfuric acid | 100 | -1.41 | 75 | 7.8 | 780.0 | - | - | 0 | 20 | 20 |
| Comparative Example 4 | 800 | sulfuric acid | 100 | -1.41 | 75 | 4.9 | 490.0 | - | - | 0 | 20 | 20 |

EP 4 691 986 A1

[Table 3]

| | Processed zeolite | | | | | | | | | Acid amount [mmol/ g] | Acid amou nt per Al amou nt [mmol /Al- mmol] |
|---|---|---|---|---|---|---|---|---|---|---|---|
| | $SiO_2/Al_2O_3$ ratio [-] | Acid strengt h [°C] | Ratio A/B Crystallinit y | Peak area | | | | | | | |
| | | | | 4-coordinate d P1 | 4-coordinate d P2 | P1+P 2 | P1/(P1+P 2) | 6-coordinated | | | |
| Example 1 | 14.8 | 359.3 | 38 | 73.5 | 16.2 | 89.7 | 0.82 | 10.40 | 1.62 | 0.81 |
| Example 2 | 21.2 | 368.6 | 40 | 81.2 | 16.9 | 98.1 | 0.83 | 1.80 | 1.15 | 0.79 |
| Example 3 | 374.2 | 421.0 | 34 | 59.1 | 37.9 | 96.8 | 0.61 | 3.19 | 0.16 | 1.78 |
| Example 4 | 41.0 | 350.0 | 43 | 70.8 | 23.0 | 93.8 | 0.76 | 5.84 | 0.33 | 0.43 |
| Example 5 | 53.0 | 352.0 | 34 | 63.8 | 27.9 | 91.8 | 0.70 | 8.24 | 0.28 | 0.38 |
| Reference Example 1 | 9.6 | 335.0 | 33 | 61.1 | 15.4 | 76.5 | 0.80 | 23.50 | 1.72 | 0.59 |
| Comparative Example 1 | 21.7 | 341.0 | 26 | 19.6 | 44.6 | 77.5 | 0.25 | 22.47 | 0.68 | 0.44 |
| Comparative Example 2 | 24.8 | 353.0 | 22 | 73.7 | 26.3 | 100.0 | 0.74 | 0.00 | 0.04 | 0.58 |
| Comparative Example 3 | 92.8 | 336.0 | 4 | 49.5 | 50.5 | 100.0 | 0.50 | 0.00 | 0.01 | 0.35 |
| Comparative Example 4 | 40.6 | 332.7 | 39 | 8.1 | 72.5 | 80.6 | 0.10 | 15.91 | 0.48 | 0.62 |

The BEA type zeolites relevant to Examples 1 to 5 had an acid strength (temperature of the top of the peak in the NH$_3$-TPD spectrum according to the ammonia-temperature programmed desorption method) in the range of 340°C or higher and 500°C or lower. The BEA type zeolites relevant to Examples 1 to 5 had a ratio A/B of 25 or higher and had higher crystallinity than in Comparative Examples 1 to 3 in which no dripping of an inorganic acid was carried out. Further, the BEA type zeolites relevant to Examples 1 to 5 had an SiO$_2$/Al$_2$O$_3$ molar ratio in the range of 13 or higher and 1,000 or lower, and specifically had the SiO$_2$/Al$_2$O$_3$ molar ratio in the range of 14 or higher and 500 or lower; the BEA type zeolites having SiO$_2$/Al$_2$O$_3$ molar ratios in a broad range were obtained.

The BEA type zeolites relevant to Examples 1 to 5 had an area ratio P1/(P1 +P2) of 0.4 or higher and 1.0 or lower, and since containing much of 4-coordinated Al easily functioning as acid points, had high acid strength. Then, the BEA type zeolites relevant to Examples 1 to 5 had a ratio A/B of 25 or higher, having high crystallinity.

Even in the case where the BEA type zeolites relevant to Examples 1 to 5 were a proton type BEA type zeolite, a sodium type BEA type zeolite, or an ammonium type zeolite, the zeolites having high acid strength and high crystallinity in a SiO$_2$/Al$_2$O$_3$ molar ratio in a broad range were obtained.

In the BEA type zeolites relevant to Examples 1 to 5, the acid amount (the total ammonium molar amount adsorbed on acid points of the zeolite) when the zeolite was heated at 10°C/min according to the ammonia-temperature programmed desorption method (NH$_3$-TPD method) was 0.30 mmol/Al-mmol or higher with respect to an Al molar amount contained in the BEA type zeolite; and the BEA type zeolites had acid points exhibiting high acid strength.

## Industrial Applicability

The BEA type zeolite of the present disclosure has high acid strength and high crystallinity in a broad range of the SiO$_2$/Al$_2$O$_3$ molar ratio, and can be used for catalysts in petrochemical industries, hydrocarbon adsorbing materials, exhaust gas purifying catalysts, and the like.

## Claims

1. A BEA type zeolite, wherein the BEA type zeolite has a top of a peak caused by adsorption towards acid points of the BEA type zeolite in a range of 340°C or higher and 500°C or lower in an NH$_3$-TPD spectrum being raised at 10°C/min according to an ammonia-temperature programmed desorption method (NH$_3$-TPD method), and wherein in an X-ray diffraction spectrum measured by an X-ray diffraction method using a CuK$\alpha$ line, a ratio A/B of maximum diffraction intensity A of peaks of the BEA type zeolite to diffraction intensity B of a (111) plane of Si as a standard reference material 640c distributed by The National Institute of Standards and Technology is 25 or higher.

2. A BEA type zeolite, wherein when the area of a peak whose peak top chemical shift value is positioned in the range of 55.5 ppm or higher and 60.0 ppm or lower is represented by peak 1 and a peak whose peak top chemical shift value is positioned in the range of 51.0 ppm or higher and lower than 55.5 ppm is represented by peak 2, the area ratio P1/(P1 + P2) of the area P1 of the peak 1 to the sum of the area P1 of the peak 1 and the area P2 of the peak 2 is in the range of 0.4 or higher and 1.0 or lower, and wherein in an X-ray diffraction spectrum measured by an X-ray diffraction method using a CuK$\alpha$ line, a ratio A/B of maximum diffraction intensity A of peaks of the BEA type zeolite to diffraction intensity B of a (111) plane of Si as a standard reference material 640c distributed by The National Institute of Standards and Technology is 25 or higher.

3. The BEA type zeolite according to claim 1 or 2, wherein the BEA type zeolite has a SiO$_2$/Al$_2$O$_3$ molar ratio in the range of 13 or higher and 1,000 or lower.

4. The BEA type zeolite according to claim 1 or 2, wherein the BEA type zeolite is a proton type BEA type zeolite ion-exchanged with hydrogen ions, a sodium type BEA type zeolite ion-exchanged with sodium ions, or an ammonium type BEA type zeolite ion-exchanged with ammonium ions.

5. The BEA type zeolite according to claim 1 or 2, wherein a total ammonium molar amount adsorbed on acid points of the BEA type zeolite in which the temperature is raised at 10°C/min according to an ammonia-temperature programmed desorption method (NH$_3$-TPD method) with respect to an Al molar amount contained in the BEA type zeolite is 0.30 mmol/Al-mmol or higher.

**Fig.1**

**Fig.2**

**Fig.3**

Example 3

27Al Chemical shift/ppm

ACTUAL MEASUREMENT — — CALCULATION

**Fig.4**

Example 3

ACTUAL MEASUREMENT (4-COORDINATED)

CALCULATION (4-COORDINATED)

P1

P2

27Al Chemical shift/ppm

ACTUAL MEASUREMENT ......... P1 — — — P2 — — CALCULATION

Fig.5

Comparative Example 4

27Al Chemical shift/ppm
—— ACTUAL MEASUREMENT       — — CALCULATION

Fig.6

Comparative Example 4

ACTUAL MEASUREMENT (4-COORDINATED)

CALCULATION (4-COORDINATED)

P1     P2

27Al Chemical shift/ppm
—— ACTUAL MEASUREMENT   ········ P1   ‒ ‒ ‒ P2   — — CALCULATION

## INTERNATIONAL SEARCH REPORT

| International application No. |
|---|
| **PCT/JP2024/013015** |

**A. CLASSIFICATION OF SUBJECT MATTER**

*C01B 39/46*(2006.01)i
FI:   C01B39/46

According to International Patent Classification (IPC) or to both national classification and IPC

**B. FIELDS SEARCHED**

Minimum documentation searched (classification system followed by classification symbols)

C01B39/02-39/48; B01J20/18; B01J29/04-29/80

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JST7580/JSTChina (JDreamIII); CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2011-126768 A (NIPPON CHEMICAL INDUSTRIAL CO., LTD.) 30 June 2011 (2011-06-30)<br>paragraph [0044], examples 1-29, table 3 | 1-5 |
| X | WO 2019/082990 A1 (MITSUI MINING & SMELTING CO., LTD.) 02 May 2019 (2019-05-02)<br>paragraph [0064] | 1, 3-5 |
| A | | 2 |
| X | WO 2022/264758 A1 (MITSUI MINING & SMELTING CO., LTD.) 22 December 2022 (2022-12-22)<br>paragraph [0049] | 1, 3-5 |
| A | | 2 |
| X | JP 2016-145138 A (UNIZEO CO., LTD.) 12 August 2016 (2016-08-12)<br>paragraph [0042] | 1, 3-5 |
| A | | 2 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 May 2024** | **04 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/013015**

| Patent document cited in search report | | | Publication date (day/month/year) | Patent family member(s) | | | Publication date (day/month/year) |
|---|---|---|---|---|---|---|---|
| JP | 2011-126768 | A | 30 June 2011 | US | 2012/0190534 | A1 | |
| | | | | paragraphs [0083], [0084], examples 1-29, table 3 | | | |
| | | | | WO | 2011/013560 | A1 | |
| | | | | EP | 2457872 | A1 | |
| | | | | KR | 10-2012-0039663 | A | |
| | | | | CN | 102712489 | A | |
| WO | 2019/082990 | A1 | 02 May 2019 | US | 2020/0338539 | A1 | |
| | | | | paragraph [0071] | | | |
| | | | | EP | 3702328 | A1 | |
| | | | | CN | 111263733 | A | |
| | | | | KR | 10-2020-0066677 | A | |
| WO | 2022/264758 | A1 | 22 December 2022 | (Family: none) | | | |
| JP | 2016-145138 | A | 12 August 2016 | US | 2018/0022612 | A1 | |
| | | | | paragraph [0057] | | | |
| | | | | WO | 2016/129555 | A1 | |
| | | | | EP | 3257813 | A1 | |
| | | | | KR | 10-2017-0115088 | A | |
| | | | | CN | 107428549 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2015536291 W
- WO 2021002322 A
- JP 4904417 B

### Non-patent literature cited in the description

- Special Edition, New Development of Powder Diffractometry. *Journal of the Crystallographic Society of Japan*, 1992, vol. 34, 86
- **YOSHIHIRO KUBOTA**. Effective fabrication of catalysts from large-pore, multi-dimensional zeolites synthesized without using organic structure-directing agents. *Chemistry of Materials*, 2014, vol. 26 (2), 1250-1259
- **J.A. VAN BOKHOVEN**. Stepwise Dealumination of Zeolite Beta at Specific T-Sites Observed with Al MAS and Al MQ MAS NMR. *J. Am. Chem. Soc.*, 2000, vol. 122, 12842-12847